# EUROPÄISCHE PATENTSCHRIFT

(11) **EP 0 720 924 B1**
(45) Veröffentlichungstag und Bekanntmachung des Hinweises auf die Patenterteilung: **03.09.1997**
(21) Anmeldenummer: 95115927.6
(22) Anmeldetag: 10.10.1995
(51) Int. Cl.: B60G 21/055, B60G 15/06

(54) **Radaufhängung**
Wheel suspension
Suspension de roue

(30) Priorität: 21.12.1994 DE 9420430 U
(43) Veröffentlichungstag der Anmeldung: 10.07.1996
(73) Patentinhaber: Dr.Ing.h.c. F. Porsche Aktiengesellschaft, 70435 Stuttgart (DE)
(72) Erfinder: Germano, Francesco, D-74343 Sachsenheim (DE); Reitter, Horst, D-71272 Renningen (DE)

(56) Entgegenhaltungen:
- EP-A- 0 312 711
- DE-A- 2 800 549
- DE-C- 4 201 837
- DE-U- 9 420 430
- US-A- 4 632 423
- REIMPELL, J ETAL: "Fahrwerktechnik: Stoss- und Schwingungsdämpfer" 1988 , VOGEL VERLAG , WÜRZBURG, DE XP002000392 * Seite 122; Abbildung 6.4 *
- REVUE AUTOMOBILE, Bd. 87, Nr. 52, 24.Dezember 1992, BERNE, CH, Seite 5 XP002000391 "La Citroen Xantia sous la loupe"

## Beschreibung

Die Erfindung bezieht sich auf eine Radaufhängung , insb. eine Hinterradaufhängung , nach dem Oberbegriff des Anspruchs 1.

Aus der DE 42 01 837 C1 ist ein Federbein mit einem Gelenkbock für einen Gehängearm eines Stabilisators bekannt. Dieser Gelenkbock ist fest mit dem Dämpferbein verbunden und bildet gleichzeitig einen unteren Federteller für eine Spiralfeder des Federbeines.

Aufgabe der Erfindung ist es, eine Radaufhängung mit einem Stabilisator zu schaffen, der in einfacher Weise spannungsfrei in Nullage einstellbar sowie in seiner Steifigkeit veränderbar ist.

Diese Aufgabe wird erfindungsgemäß durch die kennzeichnenden Merkmale des Anspruchs 1 gelöst. Weitere vorteilhatte Merkmale beinhalten die Unteransprüche.

Die mit der Erfindung hauptsächlich erzielten Vorteile bestehen darin, daß der Gelenkbock auf dem Dämpferbein in der Höhe und in seiner Winkellage zum Stabilisator verstellbar ist. Hierzu weist das Dämpferbein ein Außengewinde auf, über das eine stufenlose Verstellbarkeit des Gelenkbockes gewährleistet ist. Zudem ist auch der untere Federteller der Spiralfeder über das Gewinde in der Höhe verstellbar.

Der Gelenkbock besteht aus einem Leichtmetall und umfaßt im wesentlichen ein Hülsenteil mit Innengewinde, an das ein Aufnahmeteil für den Gehängearm angeformt ist. Damit ein fester Sitz des Gelenkbockes auf dem Dämpferbein gewährleistet ist, wird der Gelenkbock über eine Kontermutter festgesetzt.

Die Verstellbarkeit in der Höhe und im Winkel zum Stabilisator ist erforderlich, damit eine unterschiedliche Steifigkeit einstellbar ist. Damit der Gehängearm in allen Steifigkeits-Stellungen freigängig zum benachbarten Radführungslenker der Radaufhängung steht, ist dieser entsprechend bogenförmig ausgebildet.

Ein Ausführungsbeispiel der Erfindung ist in der Zeichnung dargestellt und wird im folgenden näher beschrieben.

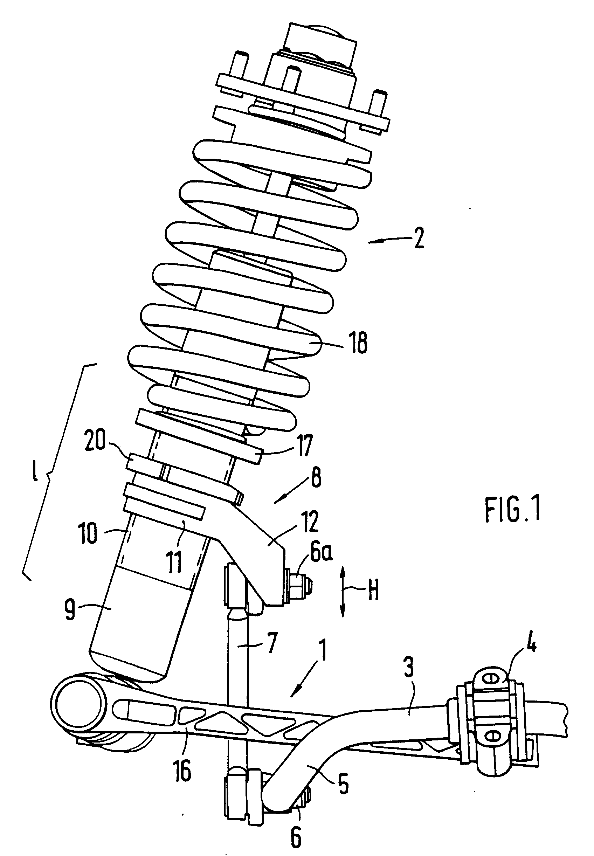

Es zeigen
- Fig. 1: eine schaubildliche Darstellung einer Radaufhängung mit Federbein und Stabilisator,

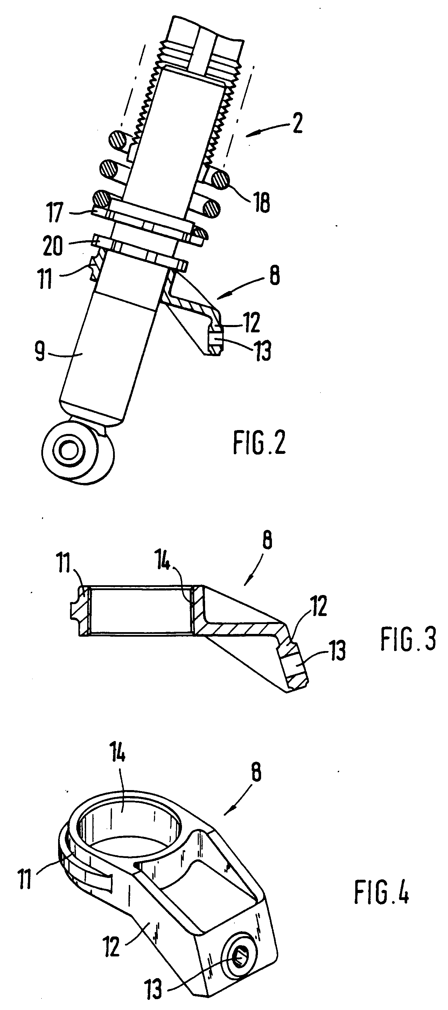

- Fig. 2: eine Vorderansicht des Federbeines mit Gelenkbock,
- Fig. 3: eine Darstellung des Gelenkbockes im Schnitt,
- Fig. 4: eine schaubildliche Darstellung des Gelenkbockes

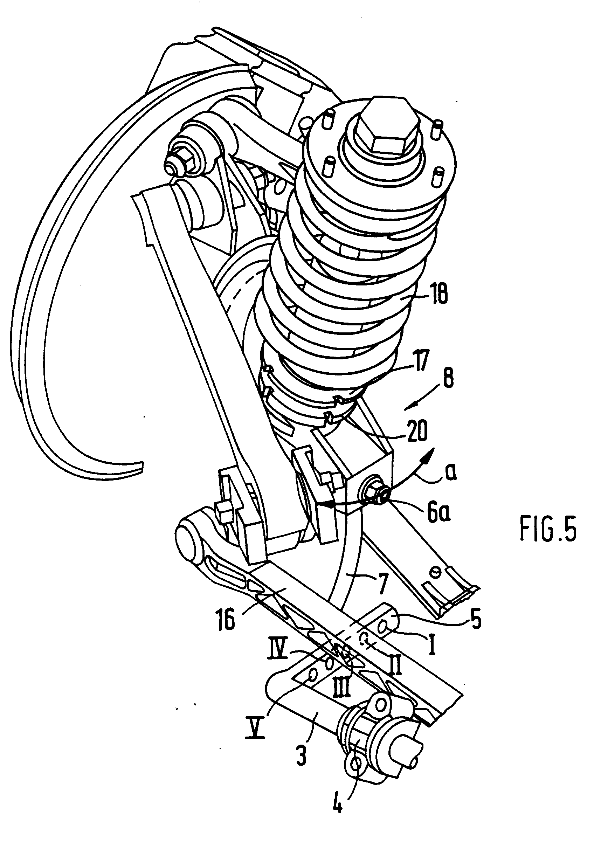

- Fig. 5: eine schaubildliche Darstellung des am Dämpferbein im Gelenkbock gehaltenen Gehängearmes und die Befestigung des Stabilisators,
- Fig. 6: eine Vorderansicht des Gehängearmes,
- Fig. 7: eine Seitenansicht des Gehängearmes und
- Fig. 8: ein Funktionsschema zur Verstellung eines Stabilisators in mehrere Stellungen.

Eine Radaufhängung 1 für ein Kraftfahrzeug ist mit einem Dämpferbein 2 und einem Stabilisator 3 ausgeführt. Dieser erstreckt sich quer im Fahrzeug zu beiden Rädern. Über Lagerungen 4 erfolgt eine Festlegung am Fahrzeugrahmen bzw. am Fahrzeugaufbau. Endseitig ist der Stabilisator 3 abgewinkelt. Diese abgewinkelten Enden bilden Schenkel 5, welche über Bolzen 6 mit einem aufwärts gerichteten Gehängearm 7 verbunden sind.

Der Gehängearm 7 ist über einen Gelenkbock 8 mit dem Zylinder 9 des Dämpferbein 2 verbunden und über ein Gewinde 10 in der Höhe gemäß Pfeilrichtung H sowie in eine Winkellage gemäß Pfeilrichtung a verstellbar.

Der Gelenkbock 8 besteht aus einem Hülsenteil 11 mit angeformtem Aufnahmeteil 12, das eine Bohrung 13 zur Aufnahme des Gehängearmes 7 über einen Bolzen 6a aufweist.

Über ein Innengewinde 14 ist der Gelenkbock 8 auf dem Außengewinde 10 des Zylinders 9 des Dämpferbeines 2 verstellbar, wobei die eingestellte Position des Gelenkbockes 8 mittels einer Kontermutter 20 gesichert wird.

Zur Einstellung verschiedener Steifigkeiten des Stabilisators 3 kann der Gehängearm 7 mit einem Schenkel 5 des Stabilisators 3 in verschiedene Positionen I bis V verbunden werden.

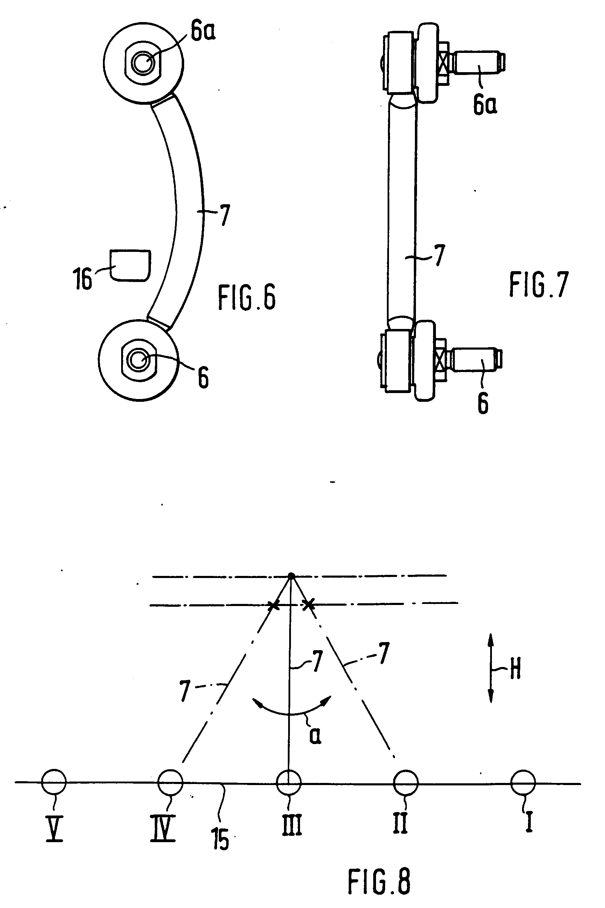

Damit die Lage des Stabilisators 3 unverändert bleiben kann, muß die Lage des Gelenkbockes 8 in der Höhe H und in der Winkellage (Pfeilrichtung a) verändert werden, wie Fig. 8 in einer Funktionsdarstellung zeigt. Wenn beispielsweise der Gehängearm 7 von der Position III in die anderen Positionen I, II oder V, VI verstellt wird, muß eine Höhenverstellung und eine Winkelverstellung des Lagerbockes 8 erfolgen. Damit durch diese Verstellung der Gehängearm nicht am benachbarten Radführungslenker 16 anstoßen kann, ist dieser bogenförmig ausgeführt, wie die Fig. 6 und 7 näher zeigen.

Das Außengewinde 10 am Zylinder 9 des Dämpferbeine 2 wird gleichzeitig zur Verstellung des unteren Federtellers 17 für die Spiralfeder 18 genutzt, wobei der Federteller ein Innengewinde aufweist.

## Patentansprüche

1. Radaufhängung , insb. Hinterradaufhängung, mit einem an einem Dämpferbein (2) über einen Gelenkbock (8) gehaltenen Gehängearm (7) für einen Stabilisator (3), **dadurch gekennzeichnet,** daß der Gelenkbock (8) über Gewinde (10,14) in der Höhe (H) und in seiner Winkellage (a) zum Stabilisator (3) verstellbar am Dämfperbein (2) gehalten ist und der Gelenkbock (8) ein Hülsenteil (11) mit angeformtem Aufnahmeteil (12) für den Gehängearm (7) umfasst und der Gelenkbock (8) über eine Kontermutter (20) am Dämpferbein (2) gesichert ist.

2. Radaufhängung nach Anspruch 1, **dadurch gekennzeichnet,** daß das Außengewinde (10) am Zylinder (9) des Dämpferbeines (2) sich über eine solche Länge (l) erstreckt und daß ein Federteller (17) für eine Spiralfeder (18) des Dämpferbeines (2) gegenüber dem Gelenkbock (8) verstellbar ist.

3. Radaufhängung nach Anspruch 1 oder einem der vorhergehenden Ansprüche, **dadurch gekennzeichnet,** daß der mit dem Gelenkbock (8) verbundene Gehängearm (7) mit dem Stabilisator (3) in mehreren Positionen (I bis V) verbindbar ist.

4. Radaufhängung nach Anspruch 1 oder einem der vorhergehenden Ansprüche, dadurch gekennzeichnet, daß der Gehängearm (7) eine bogenförmige Form zur Freigängigkeit gegenüber einem Radführungslenker (16) der Radaufhängung (1) aufweist.

5. Radaufhängung nach Anspruch 1 oder einem der vorhergehenden Ansprüche,dadurch gekennzeichnet, daß der Gelenkbock(8)aus einem Leichtmetall-Werkstoff besteht.

## Claims

1. A wheel suspension, in particular a rear-wheel suspension, with a suspension arm (7) held on a shock-absorbing leg (2) by way of a pivot frame (8), for a stabilizer (3), **characterized in that** the pivot frame (8) is held displaceably on the shock-absorbing leg (2) by way of threads (10, 14) at the height (**H**) and in its angular position (**a**) with respect to the stabilizer (3), and the pivot frame (8) comprises a sleeve part (11) with an integrally moulded receiving part (12) for the suspension arm (7), and the pivot frame (8) is secured on the shock-absorbing leg (2) by way of a lock nut (20).

2. A wheel suspension according to Claim 1, **characterized in that** the external thread (10) on the cylinder (9) of the shock-absorbing leg (2) extends over such a length (**l**), that a spring cup (17) for a helical spring (18) of the shock-absorbing leg (2) is displaceable with respect to the pivot frame (8).

3. A wheel suspension according to Claim 1 or one of the preceding Claims, **characterized in that** the suspension arm (7) connected to the pivot frame (8) can be connected to the stabilizer (3) in several positions (**I** to **V**).

4. A wheel suspension according to Claim 1 or one of the preceding Claims, **characterized in that** the suspension arm (7) has a curved shape for free movability with respect to a wheel-control arm (16) of the wheel suspension (1).

5. A wheel suspension according to Claim 1 or one of the preceding Claims, **characterized in that** the pivot frame (8) consists of a light-metal material.

## Revendications

1. Suspension de roue en particule suspension de roue arrière, avec un bras de suspension (7), maintenu sur une jambe d'amortisseur (2), par un support d'articulation (8), pour un stabilisateur (3), caractérisée en ce que le support d'articulation (8) est maintenu réglable sur la jambe d'amortisseur (2), par des filetages (10, 14), dans la hauteur (H) et dans sa position angulaire (a) par rapport au stabilisateur (3), et le support d'articulation (8) comprend un élément à manchon (11) avec élément de logement (12) formé d' un seul tenant pour le bras de suspension (7) et le support d'articulation (8) est bloqué sur la jambe d'amortisseur (2) par un contre-écrou (20).

2. Suspension de roue selon la revendication 1, caractérisée en ce que le filetage extérieur (10) sur le cylindre (9) de la jambe d'amortisseur (2) s'étend sur une longueur (I) et en ce qu'une coupelle de ressort (17) pour un ressort spiral (18) de la jambe d'amortisseur (2) est réglable par rapport au support d'articulation (8).

3. Suspens i on de roue sel on la revendication 1 ou l'une des revendications précédentes caractérisée en ce que le bras de suspension (7), relié au support d'articulation (8), peut être relié avec le stabilisateur (3) dans plusieurs positions (I à V).

4. Suspension de roue selon la revendication 1 ou l'une des revendications précédentes caractérisée en ce que le bras de suspenson (7) présente une forme en arc pour une liberté de mouvement par rapport à un bras oscillant de guidage de roue (16) de la suspension de roue (1).

5. Suspension de roue selon la revendication 1 ou l'une des revendications précédentes caractérisée en ce que le support d'articulation (8) est fait d'un matériau en métal léger.
